Europäisches Patentamt

European Patent Office

Office européen des brevets

(19)

(11) Numéro de publication : **0 381 559 B1**

(12) **FASCICULE DE BREVET EUROPEEN**

(45) Date de publication du fascicule du brevet :
25.03.92 Bulletin 92/13

(51) Int. Cl.⁵ : **B60N 2/32**

(21) Numéro de dépôt : **90400213.6**

(22) Date de dépôt : **24.01.90**

(54) **Siège à dossier inclinable et rabattable.**

(30) Priorité : **31.01.89 FR 8901194**

(43) Date de publication de la demande :
**08.08.90 Bulletin 90/32**

(45) Mention de la délivrance du brevet :
**25.03.92 Bulletin 92/13**

(84) Etats contractants désignés :
**BE DE ES GB IT NL SE**

(56) Documents cités :
**FR-A- 2 463 596**
**US-A- 4 629 252**
**PATENT ABSTRACTS OF JAPAN vol. 2, no. 66**
**(M-78)(1299) 19 mai 1978, & JP-A-53 30530**
**(AISHIN SEIKI) 22 mars 1978,**

(73) Titulaire : **CESA COMPAGNIE EUROPEENNE
DE SIEGES POUR AUTOMOBILES
20, rue Paul-Vaillant-Couturier
F-92300 Levallois-Perret (FR)**

(72) Inventeur : **Fourrey, François
34 rue du Petit Chenois
F-25200 Montbeliard (FR)**
Inventeur : **Mauffrey, Jean-François
8 rue du Stade, Andelnans
F-90400 Danjoutin (FR)**

(74) Mandataire : **Mestre, Jean et al
c/o CABINET LAVOIX 2, place d'Estienne
d'Orves
F-75441 Paris Cédex 09 (FR)**

Jouve, 18, rue Saint-Denis, 75001 PARIS

EP 0 381 559 B1

## Description

L'invention concerne les sièges et, plus particulièrement, les sièges d'automobiles munis d'une assise et d'un dossier inclinable et rabattable à volonté.

Dans l'industrie automobile, il est classique d'équiper les véhicules de sièges avant dont le dossier est inclinable relativement à l'assise. Ces dossiers sont, habituellement, inclinables vers l'arrière de manière à améliorer le confort de conduite ou de séjour des occupants. L'inclinaison des dossiers peut parfois même être totale , pratiquement à l'horizontal vers l'arrière, de manière à transformer le siège en couchette. Dans d'autres cas, le dossier est aussi basculable totalement vers l'avant de manière à venir prendre appui sur l'assise de manière à dégager un volume important.

Comme on le sait, pour parvenir à ceci en respectant la sécurité, il faut que le dossier soit articulé par rapport à l'assise à l'aide d'un dispositif de réglage d'inclinaison qui soit d'une efficacité totale, c'est-à-dire qu'une fois le choix de l'inclinaison relative fait, le dossier ne puisse pas modifier son orientation même en cas d'efforts violents tels que ceux qui peuvent résulter d'un choc. Un dispositif de réglage de l'inclinaison qui répond aux critères ainsi brièvement rappelés, est par exemple, celui qui est décrit dans le brevet français FR-A-2 463 596.

Si, généralement, ce type de siège donne satisfaction aux utilisateurs, il n'est cependant pas d'un usage universel. En effet, dans certains cas, il est nécessaire ou utile voire agréable, de pouvoir disposer d'une tablette approximativement horizontale.

Une autre approche est exposée dans le document US-A-4 629 252. Tous les éléments divulgués par ce document et qui sont nécessaires à la présentation de l'invention sont mentionnés dans le préambule de la revendication principale.

L'invention a pour but de faire en sorte que le dossier d'un siège, notamment pour véhicule automobile, soit non seulement inclinable par rapport à l'assise, mais aussi basculable de manière à pouvoir le transformer en tablette à la manière, définie dans la partie caractérisante de la revendication 1.

Des modes particuliers de l'invention revendiquée sont définis dans les revendications dépendantes.

D'autres caractéristiques de l'invention apparaîtront à la lecture de la description et des revendications qui suivent et à l'examen du dessin annexé donné seulement à titre d'exemple où :

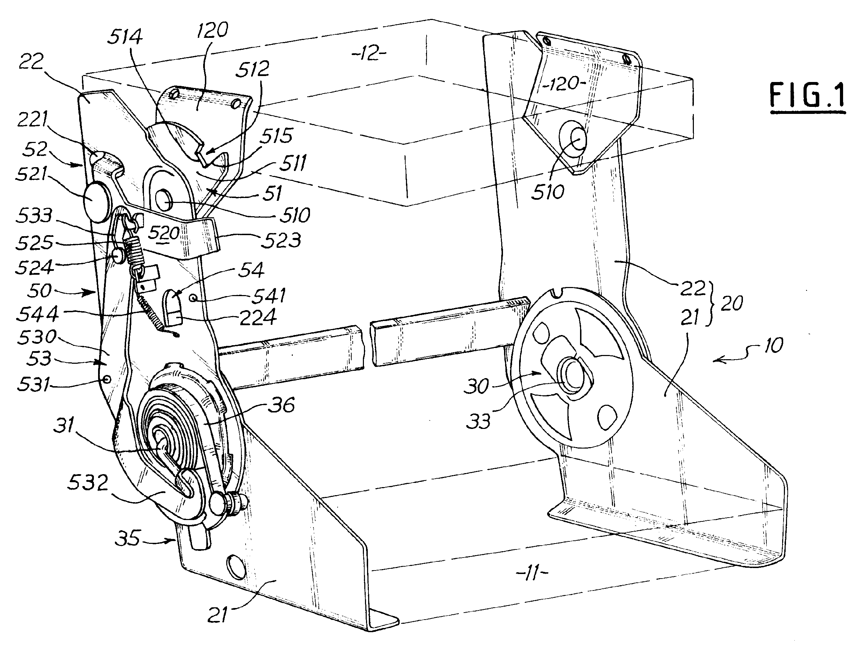

– la Figure 1 est une vue perspective schématique d'un mode de réalisation d'un siège suivant l'invention observé du côté droit;

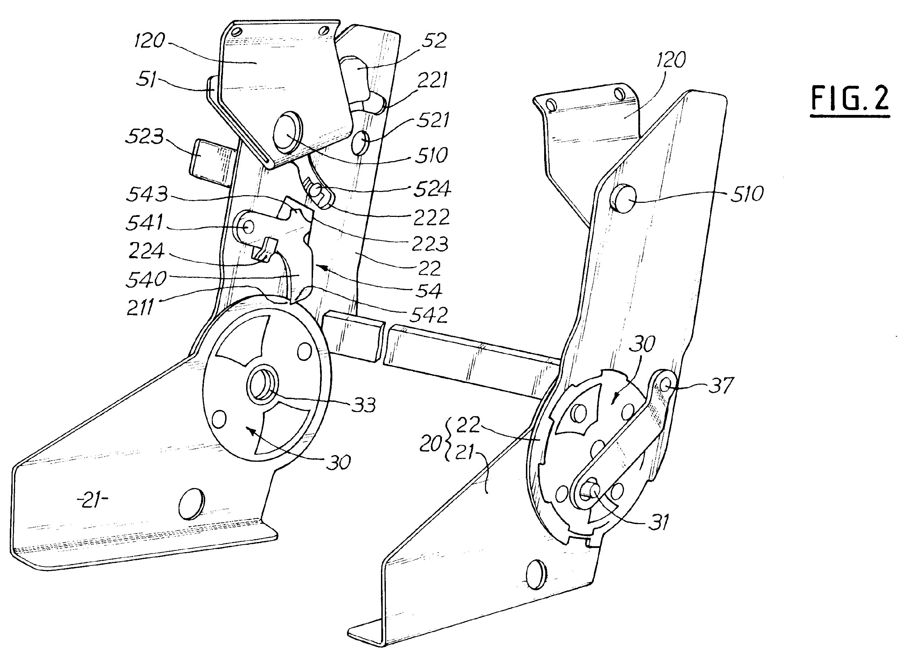

– la Figure 2 est une vue analogue à celle de la Figure 1 mais du côté gauche;
– la Figure 3 est une élévation partielle du siège de la Figure 1 montrant son architecture;
– la Figure 4 est une vue analogue à celle de la Figure 3 dans une position différente;
– la Figure 5 est une vue analogue à celle de la Figure 3 dans une autre position; et,
– la Figure 6 est une vue analogue à celle de la Figure 3 où le dossier est dans sa position rabattue en tablette.

Les sièges à assise et dossier relativement inclinables notamment pour véhicule automobile étant bien connus dans la technique, on ne décrira dans ce qui suit que ce qui concerne directement ou indirectement l'invention. Pour le surplus, le spécialiste de la technique considérée puisera dans les solutions classiques courantes à sa disposition pour faire face aux problèmes particuliers auxquels il est confronté.

Dans la suite, on désignera toujours par un même numéro de référence un élément homologue quel que soit le mode de réalisation.

Comme on peut le voir en se reportant aux diverses figures du dessin, un siège 10 avec une assise 11 et un dossier 12 suivant l'invention est muni d'une armature 20 à laquelle est associé un dispositif de réglage de l'inclinaison 30. Grâce à ce dispositif, par exemple du type indiqué dans le brevet précité (FR-A-2 463 596), il est possible d'incliner le dossier entre une position redressée pratiquement verticale, et d'autres positions inclinées modifiables à volonté. Ce siège est aussi équipé d'un mécanisme de basculement 50 pour rendre le dossier proprement dit mobile entre une première position normale où la face antérieure du dossier sert d'appui dorsal à son occupant et une deuxième position rabattue où la face postérieure de ce dossier sert de tablette.

Les assises 11 et dossiers 12 proprement dits étant de toute nature classique approriée, ceux-ci ne sont illustrés que très schématiquement et très partiellement pour ne pas alourdir le dessin.

Pour la commodité de l'exposé, on décrira successivement chacun des constituants d'un tel siège suivant l'invention avant d'en expliquer le fonctionnement.

L'assise 11 et le dossier 12 sont destinés à être portés par l'armature 20. Cette armature 20 comprend des flasques 21 latéraux destinés à recevoir l'assise et des flasques 22 latéraux pour recevoir le dossier proprement dit qui est, lui, fixé à une ossature 120.

Comme il est classique, les flasques 21 destinés à recevoir l'assise sont montés sur un plancher de véhicule par l'entremise, par exemple, de glissières qui permettent de régler la position longitudinale et éventuellement verticale du siège. Ce plancher et ces glissières ne sont pas représentés.

Pour des raisons qui apparaîtront par la suite, l'un au moins des flasques 21 est pourvu d'un cran 211 et l'un au moins des flasques 22 est transpercé d'une ouverture 221, d'une fente 222, d'un ajour 223 et porte un guide 224; ceci est clairement illustré sur les figures du dessin.

Les flasques 21 et 22 de l'armature 20 sont réunis à l'aide d'une articulation à dispositif de réglage de l'inclinaison. Comme on le voit, on utilise dans ce cas particulier un dispositif 30 du type de celui décrit dans le brevet indiqué précédemment (FR-A-2463 596) mais il est clair que tout autre type de dispositif similaire peut être utilisé. On rappelera que le dispositif de ce document comprend une commande 31 telle qu'un arbre équipé d'une manivelle 310 qui se termine par un bout 311. Il comprend aussi un tambour denté intérieurement et un ressort de rappel 33 agissant sur des cames. Le tambour, non représenté, est porté par les flasques 21 et les cames, non représentées, associées aux flasques 22 sont munies de dentures qui coopèrent avec le tambour denté intérieurement; elles sont sollicitées par le ressort 33 dans une position habituelle enclenchée qui bloque les positions relatives de l'assise et du dossier. Grâce à la commande 31, il est possible de faire prendre une autre position transitoire déclenchée où les cames et le tambour ne sont plus en prise mais libres et qui permet d'incliner à volonté la position du dossier par rapport à l'assise. L'amplitude maximale d'inclinaison que peut prendre le dossier entre la position complètement redressée et la position extrême inclinée est fixée par un arrêtoir 35 constitué par exemple d'un plot 350 porté par l'un au moins des flasques 21 et de butées 351 et 352 portées par le flasque 22 correspondant. Un ressort de rappel 36 sollicite normalement le dossier vers sa position redressée. Si nécessaire, une transmission 37 relie la commande 31 à une commande analogue d'un autre dispositif placé de l'autre côté opposé, comme illustré.

Comme on l'a indiqué précédemment, le siège suivant l'invention comprend aussi un mécanisme de basculement 50 interposé entre l'un au moins des flasques 22 du dossier et l'ossature 120 de ce dernier de manière à rendre le dossier proprement dit mobile entre une première position normale où sa face antérieure peut servir d'appui dorsal et une deuxième position rabattue où sa face postérieure peut servir de tablette. Ce mécanisme comprend, entre autres, au moins une joue 51, un verrou 52, une timonerie 53 et une sécurité 54.

Comme on peut le voir, la joue 51 est portée fixe par l'ossature 120 et montée sur le flasque 22 de manière à pouvoir tourner entre ses première et deuxième positions. Cette joue bascule sur un axe 510 et comprend un voile 511 en forme de secteur de cercle, centré sur cet axe, dont la tranche périphérique porte des encoches 512 et 513 qui présentent un fond 514 et des flancs 515. Le voile 511 est en outre muni d'un talon 516. Ceci est illustré et on y reviendra.

Le verrou 52, qui comprend une gâche et un pêne, est associé à ces joue 51 et flasque 22. Ce verrou est mobile entre une première position active pour immobiliser le dossier dans l'une ou l'autre de ses première et deuxième positions et une position inactive pour permettre le basculement du dossier proprement dit. Ce verrou comprend un levier 520 susceptible de basculer sur une cheville 521 du flasque 22. Ce levier présente un bec 522 et un bras de manoeuvre 523 et porte un galet 524. Un ressort 525 sollicite normalement le levier, c'est-à-dire le verrou vers sa première position.

Ce levier constitue le pêne du verrou alors que la gâche de celui-ci avec laquelle il coopère est constituée par le voile en secteur de cercle de la joue. Le bec 522 est destiné à s'engager dans l'une ou l'autre des encoches 512, 513.

La timonerie 53 qui relie et commande le dispositif de réglage de l'inclinaison 30 et le verrou 52, comprend une équerre 530, relativement évasée, montée basculante sur une cheville 531 du flasque 22. Cette équerre se termine par un étrier 532 et est transpercée par une boutonnière 533 coudée. Pour des raisons que l'on indiquera par la suite, cet étrier est destiné à recevoir le bout 311 de la manivelle 310 et la boutonnière 533 est destinée à recevoir le galet 524. De la sorte, lorsqu'on agit sur le bras 523 de manoeuvre, on peut mouvoir soit l'arbre du dispositif de réglage pour le faire passer de l'une à l'autre de ses positions habituelle et transitoire, soit le verrou pour le faire passer de sa première position active à sa position inactive.

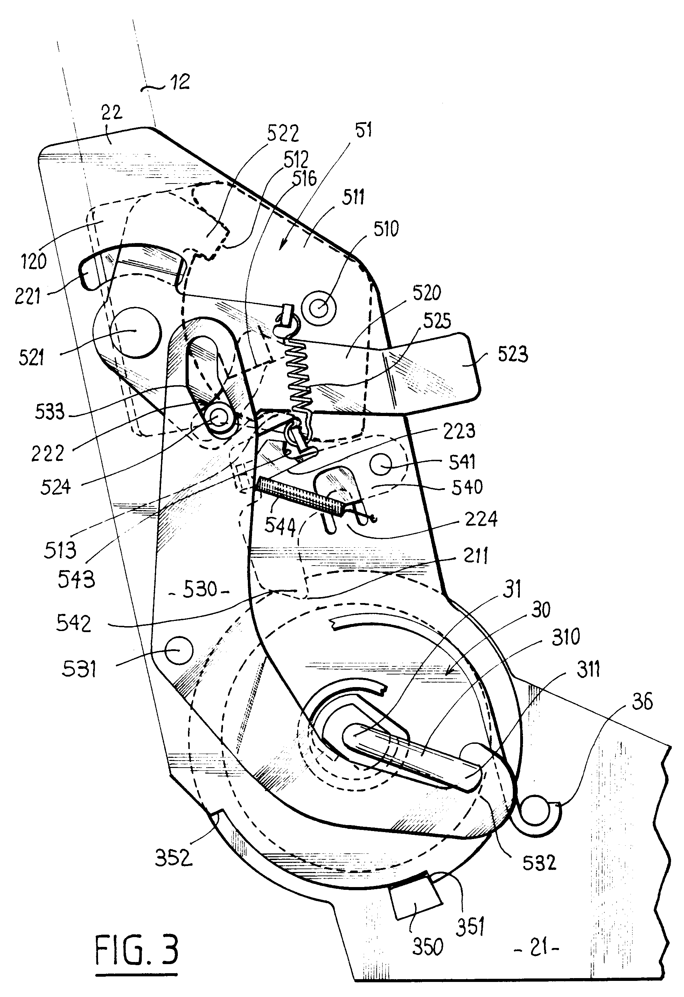

La sécurité 54 comprend un loquet 540 monté basculant sur une cheville 541 du flasque 22. Ce loquet porte une dent 542 et un ergot 543. Ce loquet est sollicité par un ressort 544. Pour des raisons que l'on indiquera par la suite, la dent 542 est destinée à coopérer avec le cran 211 du flasque 21 et l'ergot 543 avec l'un des flancs 515 de l'encoche 513 du voile 511 de la joue 51. Ce loquet est maintenu par le guide 224 du flasque 22 et sollicité par le ressort 544 dans le sens anti-horaire (sur la figure 3).

Tous les constituants du siège selon l'invention ainsi décrits à propos des figures du dessin, sont réunis, assemblés et montés comme il est clairement illustré sur les figures du dessin. Comme on le voit, l'ouverture 221 du flasque 22 est traversée par le verrou 52 contre-coudé de manière à lui permettre de changer de plan et la fente 222 courbe, centrée sur la cheville 521, est traversée par le galet 524 pour lui permettre de rencontrer le talon 516 du voile de la joue 51. De même, l'ajour 223 permet à la sécurité 54 de changer de plan pour que son ergot 543 puisse coopérer avec le flanc 515 de l'encoche 513 du voile de la joue. Le guide 224 chevauche la sécurité 54 de manière qu'elle puisse basculer tout en restant dans son plan. Les ancrages des différents ressorts sont faits, comme illustré, sur des pattes, languettes ou analogues de manière à exercer des efforts sur les éléments basculants auxquels ils sont fixés pour les solliciter dans les sens particuliers appropriés.

On expliquera maintenant le fonctionnement de ce siège selon l'invention.

On suppose que le dossier du siège selon l'invention est initialement totalement redressé comme cela est illustré sur la figure 3; les constituants sont dans les positions représentées.

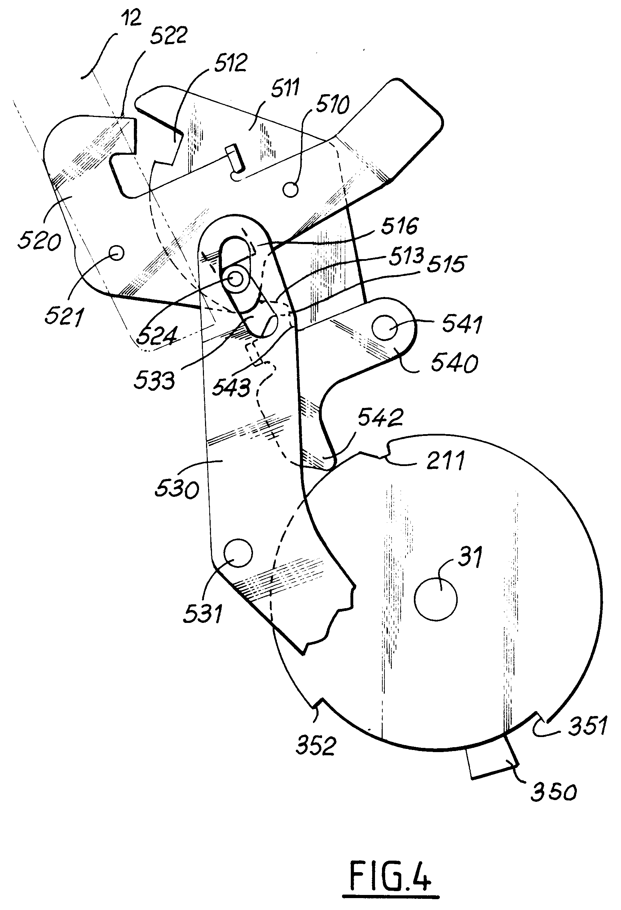

On souhaite alors modifier l'inclinaison du dossier. Pour ce faire, on saisit le bras 523 du levier 520 du verrou 52 et on le soulève pour le faire tourner autour de la cheville 521. En se soulevant, le galet 524 glisse dans la boutonnière 533 coudée de l'équerre 530 de la timonerie 53. L'équerre bascule aussi dans le sens des aiguilles d'une montre sur sa cheville 531 et déplace donc le bout 311 de la manivelle 310 associée à l'arbre de la commande 31 du dispositif de réglage de l'inclinaison qui est emprisonné dans l'étrier 532. En faisant ceci, on fait passer ce dispositif de sa position habituelle enclenchée de blocage vers laquelle il est normalement sollicité à sa position déclenchée transitoire de réglage où les cames et le tambour denté sont désolidarisés. En même temps, le galet 524 est venu prendre appui contre le talon 516 du voile 511 associé à la joue 51. Les flasques 22 du dossier sont alors désolidarisés de ceux 21 de l'assise. On peut maintenant incliner le dossier dans la position souhaitée en poussant sur la partie supérieure du dossier 12 à l'encontre du ressort 36; en faisant ceci on empêche le dossier de basculer dans le sens horaire et le talon 516 retient le galet 524 interdisant ainsi au levier 520 d'aller au-delà de la position représentée sur la figure 4. Lorsque la position recherchée est atteinte, on relâche le bras 523. Les ressorts 33 et 525 opèrent alors pour rappeler les éléments à leurs positions initiales respectives.

Ceci achevé, on se trouve dans la position illustrée sur la Figure 4. Comme on peut l'observer, la dent 542 du loquet 540 de la sécurité 54 qui était initialement engagée dans le cran 211 de l'un des flasques 21 a quitté ce dernier et porte maintenant sur la périphérie de la couronne du tambour denté du dispositif 30. Simultanément, en basculant sur sa cheville 541, le loquet 540 en tournant dans le sens des aiguilles d'une montre, est venu placer son ergot 543 contre le flanc 515 de l'encoche 513. Si l'on soulève maintenant le bras 523 du levier 520 et qu'on le retient dans sa position haute où son bec 522 s'est dégagé de l'encoche 512, il n'est pas possible de faire basculer le dossier puisque la joue 51 ne peut plus tourner autour de l'axe 510 du fait du contact de cet ergot et de ce flanc; le mécanisme est condamné. Il n'y a donc aucun risque que, par inadvertance, on place le dossier incliné en position rabattue de tablette.

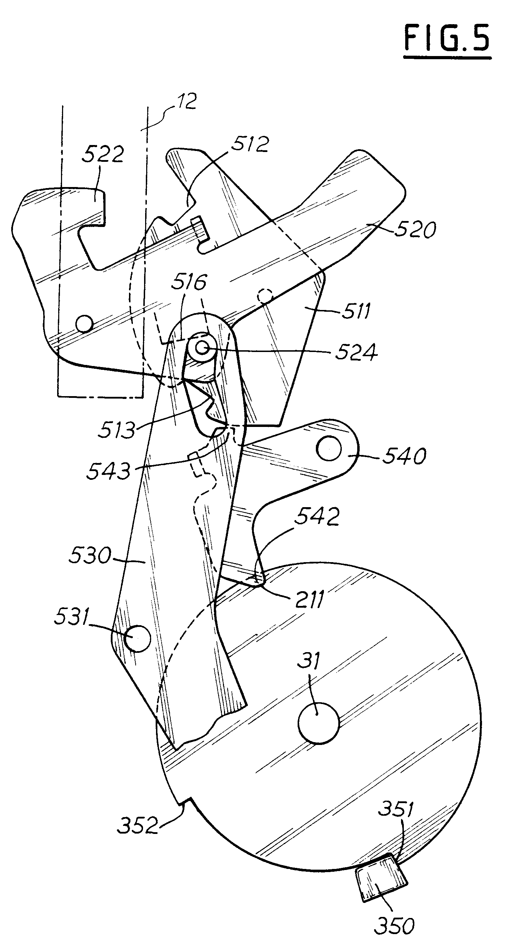

On se reportera maintenant à la Figure 5 où l'on a illustré le siège dont le dossier est redressé, au moment où l'on s'apprête à rabattre le dossier proprement dit en tablette. Pour ce faire, on se saisit du bras 523 du levier du verrou que l'on soulève à fond dans le sens anti-horaire. On observera tout d'abord que le loquet 540 de la sécurité 54 est dans une position telle que sa dent 542 est engagée dans le cran 211 du flasque 21. Ainsi l'ergot 543 n'est pas face au flanc 515 de l'encoche 513 et ne peut en aucune manière entraver toute rotation éventuelle de la joue. En soulevant le bras 523 du levier 520, on fait basculer celui-ci dans le sens anti-horaire de manière que son bec 522 se sépare de l'encoche 512. Simultanément, le galet 524 appuie contre le talon 516 de la joue et amorce un basculement du dossier autour de son axe 510. Il suffit alors de se saisir de l'extrémité supérieure du dossier pour poursuivre le mouvement ainsi amorcé vers l'avant.

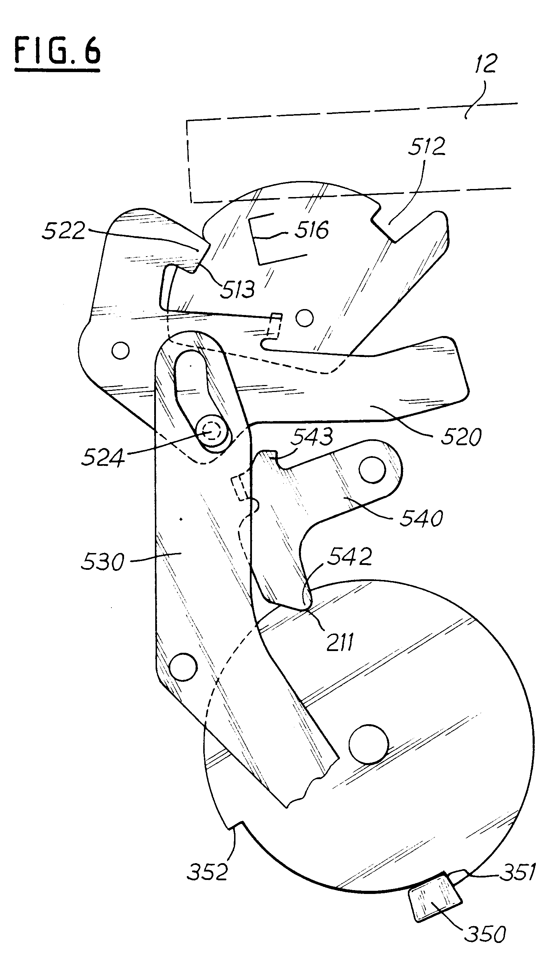

Lorsque ce mouvement est achevé et que la face postérieure du dossier qui sert de tablette est pratiquement horizontale, le siège occupe la position où il est illustré sur la Figure 6. On voit alors que le bec 522 du levier 520 est engagé dans l'autre encoche 513 de la joue pour fixer d'une manière définitive la position de la tablette, après relâchement du bras 523 de manoeuvre rappelé par son ressort 525.

Les divers composants du siège suivant l'invention sont, par exemple, faits dans des tôles d'acier de nuances appropriées qui sont conformées, par exemple, par découpe et estampage, comme il est classique. Les axes géométriques de basculement ou de rotation ont été proposés comme étant des chevilles mais il est clair que toutes autres solutions telles que des vis, boulons, rivets ou analogues peuvent aussi convenir.

Les dossier et assise du siège proprement dits sont de toute nature classique. C'est pourquoi ils ne sont qu'illustrés que très schématiquement en trait discontinu.

Dans ce qui précède, on n'a décrit que les constituants qui sont situés sur le côté droit du siège. Il est clair que les constituants du côté gauche peuvent être les mêmes, à la transposition près éventuellement due à la symétrie ou bien être simplifiés. En particulier on peut supprimer le levier de manoeuvre 520 et le loquet 540. Toutefois, pour assurer la commande du dispositif de réglage de l'inclinaison 30 du côté gauche, on utilise alors simplement une transmission 37 constituée par une tige transversale, solidaire de la cheville 531, qui portera ce qui est nécessaire pour entraîner la manivelle.

On voit donc tout l'intérêt du siège suivant l'invention qui, non seulement permet de disposer d'un dossier inclinable, mais aussi d'un dossier rabattable dont la face postérieure peut alors servir de tablette.

## Revendications

1. Siège (10) constitué, entre autres, d'une assise (11) et d'un dossier (12) porté par une ossature (120), d'une armature (20, 21, 22) avec des flasques (21) pour recevoir l'assise (11) et des flasques (22) pour recevoir le dossier (12) et d'une articulation à dispositif de réglage (30) de l'inclinaison du dossier (12) qui est intercalé entre les flasques (21, 22) et qui est muni d'une commande (31) pour le faire passer entre une position habituelle enclenchée de blocage vers laquelle il est normalement sollicité pour immobiliser relativement l'un à l'autre ces dossier (12) et assise (11) et une position transitoire déclenchée de libération qui permet un réglage de l'inclinaison de ce dossier (12) relativement à cette assise (11) entre une position redressée et d'autres positions inclinées modifiables à volonté, ce siège (10) comprenant en plus un mécanisme de basculement (50) qui est interposé entre l'un des flasques (22) et ossature (120) du dossier (12) pour rendre le dossier (12) mobile entre une première position normale pour servir d'appui dorsal et une deuxième position rabattue pour servir de tablette et qui est équipé d'au moins une joue (51) portée par l'ossature (120) et montée sur l'un des flasques (22) de manière à pouvoir tourner suivant un axe (510) entre ces première et deuxième positions, d'un verrou (52) avec une gâche (511, 512, 513) et un pêne (520, 522) qui est associée à ces joue (51) et flasque (22) et qui est mobile entre une première position active vers laquelle il est normalement sollicité pour immobiliser le dossier (12) dans ladite position normale pour servir d'appui dorsal et étant caractérisé en ce que ce verrou (52) est mobile dans une autre position active vers laquelle il est normalement sollicité pour immobiliser le dossier (12) dans sa position rabattue vers l'avant et en ce qu'une timonerie (53) relie et commande le dispositif de réglage de l'inclinaison (30) et le verrou (52) soit pour agir sur la commande (31) du dispositif de réglage (30) pour le faire passer de l'une à l'autre de ses positions habituelle et transitoire, soit pour agir sur le verrou (52) pour le faire passer de sa position active à sa position inactive, et en ce qu'une sécurité (54) est montée sur ce flasque (22) pour coopérer avec l'autre flasque (21) qui lui est associé et agit sur cette joue (51) pour autoriser le basculement du dossier (12) de sa première position normale à sa deuxième position rabattue seulement lorsque le dossier (12) est préalablement en position redressée.

2. Siège selon la revendication 1, caractérisé en ce que la gâche du verrou (52) est portée fixe par la joue (51) et en ce que le pêne (52) est monté articulé sur le flasque (22).

3. Siège selon l'une quelconque des revendications 1 et 2, caractérisé en ce que la gâche du verrou (52) est constituée par un voile (511) en forme de secteur de cercle centré sur cet axe (510) et dont la tranche périphérique porte des encoches (512, 513) qui définissent respectivement la première position normale et la deuxième position rabattue.

4. Siège selon la revendication 3, caractérisé en ce que le pêne du verrou (52) est constitué par un levier (520) monté basculant sur une cheville (521) du flasque (22) et dont l'une des extrémités porte un bec (522) destiné à s'engager dans les encoches (512, 513) et l'autre un bras (523) de manoeuvre.

5. Sièges selon l'une quelconque des revendications 1 à 4, caractérisé en ce que la timonerie (53) comprend une équerre (530) articulée sur une cheville (531) du flasque (22) et dont l'une des extrémités est munie d'un étrier (532) destiné à être relié à la commande (31) et qui est transpercée d'une boutonnière (533) destinée à recevoir un galet (524) porté par le pêne du verrou (52).

6. Siège selon l'une quelconque des revendications 1 à 5, caractérisé en ce que la sécurité (54) est constituée d'un loquet (540) qui est monté basculant sur une cheville (541) du flasque (22) et muni d'une dent (542) destinée à coopérer avec un cran (211) du flasque (21) et d'un ergot (543) destiné à coopérer directement ou indirectement avec cette joue (51).

## Patentansprüche

1. Sitz (10), der, unter anderem, aus einer Sitzfläche (11), einer von einem Gerippe getragenen Rückenlehne (12), einer Armierung (20, 21, 22) mit Flanschen (21) für die Aufnahme des Sitzes (11) und Flanschen (22) für die Aufnahme der Rückenlehne (12), sowie einem Gelenk mit einer Vorrichtung (30) für die Regulierung der Neigung der Rückenlehne (12) besteht, die zwischen den Flanschen (21, 22) angeordnet ist, und die mit einer Betätigung (31) versehen ist, um ihn zwischen einer üblichen eingerasteten Blockierstellung, in der er normalerweise eingesetzt wird, um die Lehne (12) und den Sitz (11) relativ zueinander festzustellen, und einer nicht eingerasteten Übergangsstellung zu bewegen, die eine Regulierung der Neigung der Rückenlehne (12) zur Sitzfläche (11) zwischen einer aufrechten Stellung und anderen frei wählbaren geneigten Stellungen erlaubt, wobei der Sitz (10) außerdem einen Kippmechanismus (50) aufweist, der zwischen einem der Flansche (22) und dem Gerippe (120) der Rückenlehne (12) angeordnet ist, um die Rückenlehne (12) zwischen einer ersten normalen Stellung beweglich zu machen, die als Rückenabstützung dient, und einer zweiten abgeklappten Stellung, um als Auflage zu dienen, und der mindestens einen Seitenteil (51) aufweist, der von dem Gerippe (120) getragen wird und auf einem der Flansche (22) so montiert ist, daß er sich um eine Mittellinie (510) zwischen der ersten und der zweiten Stellung drehen kann, sowie eine Verriegelung (52) mit einem Schließhaken (511, 512, 513) und einem Schnapper (520, 522), der dem Seitenteil (51) und dem Flansch (22) zugeordnet ist und der zwischen einer ersten aktiven Stellung beweglich ist, in der er normalerweise eingesetzt wird, um die Rückenlehne (12) in ihrer normalen Stellung festzustellen, damit sie als Rückenabstützung dienen kann, **dadurch gekennzeichnet, daß** die Verriegelung (52) in einer anderen aktiven Stellung beweglich ist, in der sie normalerweise verwendet wird, um die Rückenlehne (12) in der nach vorne heruntergeklappten Stellung zu arretieren, und dadurch, daß ein Gestänge (53) die Vorrichtung für die Einstellung der Neigung (30) und die Verriegelung (52) verbindet und steuert, um entweder auf die Betätigung (31) der Einstellvorrichtung (30) einzuwirken, um sie zwischen der üblichen Stellung und der Übergangsstellung zu bewegen, oder um auf die Verriegelung (52) einzuwirken, um sie aus ihrer aktiven Stellung in die inaktive Stellung zu bewegen, und dadurch, daß eine Sicherung (54) auf dem Flansch (22) montiert ist, um mit dem anderen Flansch (21) zusammenzuwirken, der ihr zugeordnet ist und auf den Seitenteil (51) einwirkt, um ein Kippen der Rückenlehne (12) aus ihrer ersten normalen Stellung in ihre zweite herabgeklappte Stellung nur dann zu erlauben, wenn sich die Rückenlehne (12) vorher in aufgerichteter Stellung befindet.

2. Sitz nach Anspruch 1, **dadurch gekennzeichnet, daß** der Schließhaken der Verriegelung (52) an dem Seitenteil (51) fest montiert ist und dadurch, daß der Schnapper (52) am Flansch (22) angelenkt ist.

3. Sitz nach einem der Ansprüche 1 oder 2, **dadurch gekennzeichnet, daß** der Schließhaken der Verriegelung (52) aus einer Vertiefung (511) In Form eines kreisförmigen Sektors besteht, der auf der Achse (510) zentriert ist und deren peripherer beschnitt Einkerbungen (512, 513) aufweist, die jeweils die erste normale Stellung und die zweite heruntergeklappte Stellung definieren.

4. Sitz nach Anspruch 3, **dadurch gekennzeichnet, daß** der Schnapper der Verriegelung (52) aus einem Hebel (520) besteht, der kippbar auf einem Zapfen (521) des Flansches (22) montiert ist und dessen eines Ende einen Schnabel (522) aufweist, der in die Einkerbungen (512, 513) eingreifen kann, und dessen anderes Ende einen Betätigungsarm (523) aufweist.

5. Sitz nach einem der Ansprüche 1 bis 4, **dadurch gekennzeichnet, daß** das Gestänge (53) einen Winkelteil (530) aufweist, der an einem Zapfen (531) des Flansches (22) angelenkt Ist und dessen eines Ende mit einem Bügel (532) versehen ist, der mit der Betätigung (31) verbunden wird und ein Langloch (533) aufweist, in das eine Rolle (524) eingreift, die von dem Schnapper der Verriegelung (52) getragen wird.

6. Sitz nach einem der Ansprüche 1 bis 5, **dadurch gekennzeichnet, daß** die Sicherung (54) durch eine Fallklinke (540) gebildet wird, die kippbar auf einem Zapfen (541) des Flansches (22) montiert ist und eine Verzahnung (542) aufweist, die mit einer Raste (211) des Flansches (21) zusammenwirkt, und einen Vorsprung (543), der direkt oder indirekt mit dem Seitenteil (51) zusammenwirkt.

## Claims

1. Seat (10) consisting, inter alia, of a base (11) and a back-rest (12) carried by a support (120), of a frame (20) with end plates (21) to accommodate the base and end plates (22) to accommodate the back-rest, and further consisting of an articulation with a device (30) for adjusting the rake of the back-rest (12) which is inserted between the end plates (21, 22) and which is provided with a control (31) for moving it between a usual blocked locking position towards which it is normally biased in order to immobilise the back-rest (12) and the base (11) relatively to each other, and a transitional released free position which allows adjustment of the rake of the back-rest relative to the base between an upright position and other tilted positions which can be altered as desired, the said seat (10) further comprising a pivot mechanism (50) which is interposed between one of the end plates (22) and the support (120) for the back-rest (12) to render the back-rest (12) movable between a first normal position in order to serve as a support for the back and a second folded-down position to serve as a shelf, and which is equipped with at least one cheek (51) carried by the support (120) and mounted on one of the end plates (22) so as to be capable of rotating about an axis (510) between these first and second positions, with a lock (52) with a catch (511, 512, 513) and a slide (520, 522) which is associated with this cheek (51) and this end plate (22) and which can move between a first active position, towards which it is normally biased in order to immobilise the back-rest (12) in the said normal position to serve as a support for the back, the said seat being characterised in that the lock (52) is adapted for movement into another active position toward which it is normally biased in order to lock the birck-rest (12) in its forward folded-down position and in that a linkage piece (53) connects and controls the device (30) for regulating the angle of rake and in that the lock (52) either in order to act on the command (31) of the regulating device (30) to cause it to move from one to the other of its normal and transitory positions or in order to act on the lock (52) to cause it to move from its active position into its inactive position and in that a safety device (54) is provided which is mounted on the end plate (22) in order to cooperate with the other end plate (21) which is associated with it and acts on this cheek (51) in order to allow the back-rest (12) to pivot from its first normal position into its second folded-down position only when the back-rest (12) was previously in an upright position.

2. A seat according to Claim 1, characterised in that the catch of the lock (52) is held fast by the cheek (51) and in that the slide of the lock (52) is articulatingly mounted on the end plate (22).

3. A seat according to any one of claims 1 and 2, characterised in that the catch of the lock (52) consists of a member (511) shaped like a segment of a circle centred on this axis (510) and the peripheral edge of which carries recesses (512, 513) which respectively define the first normal and second folded-down position.

4. A seat according to Claim 3, characterised in that the slide of the lock (52) consists of a lever (520) mounted to pivot about a pin (521) on the end plate (22) and one of the ends of which carries a nose (522) intended to engage the recesses (512, 513) while the other end carries an operating arm (523).

5. A seat according to any one of Claims 1 to 4, characterised in that the linkage piece (53) comprises an angled bracket (530) articulated on a pin (531) on the end plate (22) and of whith one of the ends is provided with a clamp (532) adapted to be connected to the control (31) and which is pierced by an elongate aperture (533) intended to accommodate a roller (524) carried by the slide of the lock (52).

6. A seat according to any one of Claims 1 to 5, characterised in that the safety device (54) consists of a latch (540) which is pivotably mounted on a pin (541) on the end plate (22) and is provided with a tooth (542) adapted to cooperate with a notch (211) on the end plate (21) and a stud (543) intended to cooperate directly or indirectly with the said cheek (51).

FIG.1

FIG.2

120
52
51
221
523
521
510
543
524
541
222
224
223
540
22
211
54
542
33
30
120
510
30
37
22
20 { 21
31
-21-

EP 0 381 559 B1

9

FIG. 3

FIG.4

# FIG.5

# FIG. 6